# FASCICULE DE BREVET EUROPEEN

(11) **EP 3 347 237 B1**
(45) Date de publication et mention de la délivrance du brevet: **08.06.2022**
(21) Numéro de dépôt: 16736025.4
(22) Date de dépôt: 30.06.2016
(51) Int. Cl.: B60N 2/56, B60H 1/00, B60H 1/22

(54) **SYSTEME DE GESTION THERMIQUE POUR VEHICULE AUTOMOBILE ET PROCEDE DE GESTION THERMIQUE CORRESPONDANT**
WÄRMEVERWALTUNGSSYSTEM FÜR EIN KRAFTFAHRZEUG UND ENTSPRECHENDES WÄRMEVERWALTUNGSVERFAHREN
THERMAL MANAGEMENT SYSTEM FOR A MOTOR VEHICLE AND CORRESPONDING THERMAL MANAGEMENT METHOD

(30) Priorité: 08.09.2015 FR 1558322
(43) Date de publication de la demande: 18.07.2018
(73) Titulaire: Valeo Systemes Thermiques, 78320 Le Mesnil Saint Denis (FR)
(72) Inventeur: NEVEU, Daniel, 91300 Massy (FR); BARAT, Didier, 78690 Les Essarts-le-Roi (FR); BEDE, Sophie, 78120 Rambouillet (FR); ROUSSEIL, Xavier, 92170 Vanves (FR)
(74) Mandataire: Valeo Systèmes Thermiques
(86) Numéro de dépôt international: PCT/EP2016/065281
(87) Numéro de publication internationale: WO 2017/041921

(56) Documents cités:
- EP-A1- 2 008 865
- GB-A- 2 344 647
- US-A1- 2010 187 211
- US-A1- 2011 172 880
- US-A1- 2012 312 520
- US-A1- 2013 232 996
- US-A1- 2015 075 763

## Description

L'invention concerne un système de gestion thermique pour véhicule automobile. L'invention concerne encore un procédé de gestion thermique mis en œuvre par un tel système de gestion thermique.

Le confort thermique dans un habitacle, tel qu'un habitacle automobile, est obtenu traditionnellement en agissant sur le débit, la température, l'humidité et l'orientation de l'air soufflé dans l'habitacle à travers différents aérateurs.

La disposition des aérateurs dans les véhicules, notamment à l'avant, ou à proximité des passagers arrière, que ce soit au niveau des montants latéraux entre portes, ou encore au niveau de la console centrale ou parfois du pavillon, et la gestion des débits et températures d'air visent à la fois à apporter des conditions locales agréables pour chaque passager, mais aussi à contrôler la température moyenne de l'habitacle autour de 20°C généralement.

D'autres éléments de l'habitacle, tels que les vitrages, la planche de bord, le volant ou encore les sièges participent aussi par contact ou rayonnement à la sensation de confort ou d'inconfort thermique du conducteur ou d'un passager du véhicule.

On a vu apparaître des dispositifs complémentaires pour améliorer et/ou personnaliser le confort thermique par contact, comme notamment les sièges chauffants ou rafraichissants, ou le volant chauffant.

Par ailleurs, en hiver et en été les vitrages sont à une température proche de la température de l'extérieur et leur rayonnement infrarouge vers les passagers participe de manière significative à la sensation de confort ou d'inconfort thermique. Le traitement des vitrages a permis de réduire le rayonnement solaire entrant dans l'habitacle. Plus récemment, le traitement des vitrages en face interne avec des revêtements à basse émissivité permet de réduire le rayonnement infrarouge des vitrages vers les passagers.

Le ressenti de confort thermique dans un habitacle résulte donc de la combinaison de différents apports thermiques, notamment par convection avec l'air, rayonnement des vitrages et parois internes, et contact avec le siège.

Dans les solutions connues, la gestion de l'air en débit et température est la principale variable d'ajustement du confort thermique.

Les lois de confort thermique sont principalement basées sur des courbes de débit et de température d'air en fonction de la température ambiante, à respecter en fonction d'un objectif de confort à atteindre.

Ainsi, il est connu d'utiliser des systèmes de commande automatisés pour une installation de conditionnement d'air, c'est-à-dire incluant notamment le chauffage, la ventilation et/ou la climatisation, au sein d'un véhicule. De tels système de commande gèrent automatiquement le confort thermique à partir d'au moins un paramètre aérothermique choisi (tel que la température du flux d'air, le débit du flux d'air et/ou la distribution du flux d'air vers l'habitacle à travers un ou plusieurs aérateurs) et de données externes comme la différence de température intérieur/extérieur, le flux solaire reçu par l'occupant ou les occupants de l'habitacle, etc.

On connaît des systèmes de commande comprenant un capteur infrarouge pour mesurer la température de peau de la tête d'un passager et qui utilisent la température détectée pour régler/modifier les paramètres aérothermiques dans l'habitacle dont la température, le débit, la distribution d'air.

En particulier, le brevet FR 2 917 855, décrit un système de commande muni d'au moins un capteur notamment de données physiologiques, tel qu'un capteur infrarouge apte à mesurer plusieurs grandeurs thermiques chacune liée à une zone corporelle d'un passager ou du conducteur du véhicule automobile. Les mesures effectuées par ce capteur sont utilisées au sein du système de commande pour déterminer une donnée de confort thermique du passager et cette donnée de confort thermique est utilisée pour le réglage de la température d'air, du débit d'air et de la distribution d'air. En particulier, il est connu de ce document de mesurer la température
corporelle du ou des occupants du véhicule à différents niveaux, notamment sur différents points particuliers du visage tels que le nez, les joues et le front, afin de déterminer une donnée de confort thermique de ce dernier. Cette donnée de confort thermique est déterminée selon une formule mathématique basée sur le ressenti thermique d'un panel représentatif de la population dont la température corporelle a été mesurée dans différentes conditions.

Le document US2012/312520 décrit également un système de gestion thermique pour véhicule automobile.

Dans les solutions précédemment décrites, la gestion du confort thermique s'appuie sur une gestion de la température moyenne de l'habitacle, et passe notamment par le contrôle d'une ou plusieurs consignes sur l'air, dans l'habitacle. Un capteur d'ensoleillement est aussi parfois utilisé pour corriger les lois de confort en fonction du flux solaire direct reçu par les occupants du véhicule.

Cependant, la puissance thermique mise en œuvre pour assurer le confort thermique du ou des occupants du véhicule est souvent disproportionnée par rapport aux besoins réels. En particulier, pour un véhicule électrique lorsque l'on veut chauffer l'habitacle par exemple, les pertes énergétiques ne peuvent être utilisées comme c'est le cas pour un véhicule avec un moteur thermique, et cela entraîne une consommation électrique additionnelle.

La puissance mise en œuvre est d'autant plus importante dans des situations transitoires, typiquement lorsque l'on entre dans un véhicule en été ou en hiver, pour atteindre un confort thermique le plus rapidement possible et diminuer l'inconfort des occupants durant ces phases transitoires de conditionnement de l'habitacle.

En outre, les besoins thermo-physiologiques pour compenser une ambiance chaude ou froide au niveau du corps d'une personne sont de l'ordre de quelques centaines de Watts alors que les puissances mises en œuvre pour la régulation thermique dans un habitacle sont de l'ordre de quelques kilo-Watts. Ceci découle du fait que les solutions connues ne se contentent pas de satisfaire une condition de température de confort thermique pour l'occupant ou les occupants du véhicule, mais établissent une température de confort thermique dans tout l'habitacle.

Une logique de gestion globale sur l'air n'est donc pas suffisante. Il convient notamment de gérer de façon plus locale les apports thermiques pour s'adapter au mieux aux besoins des occupants du véhicule.

Par ailleurs, les véhicules tendent à être de plus en plus autonomes ce qui peut amener à modifier la position des occupants dans l'habitacle de sorte que la disposition des aérateurs par exemple ne serait plus pertinente. La stratégie de gestion du confort thermique doit être repensée de façon à pouvoir d'adapter aux changements de position possibles dans l'habitacle.

L'invention a donc pour objectif de pallier au moins partiellement ces inconvénients de l'art antérieur en proposant un système de gestion thermique permettant de réguler l'état thermique d'un occupant, tout en réduisant la puissance thermique mise en œuvre.

À cet effet, la présente invention propose un système de gestion thermique pour véhicule automobile, ledit véhicule comprenant au moins deux équipements, ledit système de gestion thermique comportant :
- au moins un capteur apte à mesurer au moins une grandeur utilisable pour la détermination d'au moins une donnée de confort thermique représentative de l'état thermique d'au moins un occupant dudit véhicule,
- un nombre prédéfini d'actionneurs respectivement configurés pour le réglage d'au moins un paramètre d'un équipement associé apte à réguler l'état thermique de l'occupant, et
- un dispositif de commande des actionneurs apte à :
   - en fonction des mesures dudit au moins un capteur, déterminer au moins une donnée de confort thermique, et apte à
   - utiliser ladite au moins une donnée de confort thermique pour déterminer si une régulation thermique est nécessaire et pour la commande des actionneurs.

Selon l'invention, le dispositif de commande comprend au moins un moyen de traitement pour en fonction de ladite au moins une donnée de confort thermique :
- identifier au moins un premier équipement permettant d'agir sur une première partie du corps de l'occupant et un deuxième équipement permettant d'agir sur une deuxième partie du corps de l'occupant, par exemple différente de la première partie, et
- commander au moins un premier actionneur configuré pour le réglage d'au moins un paramètre du premier équipement identifié et commander un deuxième actionneur configuré pour le réglage d'au moins un paramètre du deuxième équipement identifié, de manière à agir sur lesdites parties du corps de l'occupant, par exemple de manière à agir de façon différentiée sur différentes parties du corps de l'occupant.

Ainsi, l'invention permet d'agir de manière différentiée sur une ou plusieurs parties du corps, telles que la tête, la nuque, les épaules, les mains, les pieds et chevilles, les bras, les jambes, le torse, le dos, par application locale de flux thermiques par exemple de natures différentes. Le système de gestion thermique permet d'agir sur l'occupant directement et non pas uniquement sur l'environnement de l'occupant.

En particulier, l'invention permet de combiner plusieurs équipements formant des sources thermiques pour agir en différents points du corps de l'occupant du véhicule. On entend par « source thermique » un élément ou équipement qui peut délivrer du chaud et/ou du froid sous forme d'un flux thermique, par exemple un flux d'air chaud et/ou un flux d'air froid, ou encore un flux par rayonnement thermique.

Cette action différenciée sur le corps est notamment intéressante pour appliquer des stimuli positifs dans des situations transitoires, comme les phases d'accueil. En effet, en attendant que le corps atteigne une thermo-neutralité les stimuli thermiques localisés, procurent à l'occupant un ressenti globalement positif.

La combinaison des sources thermiques disponibles dans le véhicule sur différentes parties ou zones corporelles de l'occupant permet d'obtenir un confort individualisé au moindre coût énergétique. En effet, en agissant au plus près de l'utilisateur, on réduit la consommation d'énergie nécessaire pour amener l'occupant dans une zone de confort thermique par rapport aux solutions de l'art antérieur qui se concentrent uniquement sur l'environnement thermique de l'occupant.

Plus particulièrement, le système de gestion thermique selon l'invention est adapté pour que la première partie du corps de l'occupant et la deuxième partie du corps de l'occupant soient différentes, le système de gestion thermique pouvant agir de façon différentiée sur les différentes parties du corps de l'occupant.

Selon un mode de réalisation préféré, le système de gestion thermique comprend un moyen d'acquisition d'au moins une information temporelle d'un scénario d'usage dudit véhicule, ladite au moins une information temporelle étant utilisable pour l'identification desdits équipements à contrôler pour réguler localement l'état thermique de l'occupant sur différentes parties de son corps.

On entend par « scénario d'usage du véhicule », un scénario qui définit la manière d'utiliser le véhicule et l'interaction de l'occupant ou des occupants avec le véhicule. Notamment le scénario d'usage du véhicule peut comprendre un séquencement dans le temps de l'utilisation du véhicule, par exemple si l'occupant vient d'entrer dans le véhicule, ou s'il est assis depuis longtemps dans le véhicule, ou encore la durée depuis laquelle le véhicule roule, et si le véhicule est en mode de conduite manuelle ou automatique.

Selon-l'invention ledit au moins un capteur comporte au moins un capteur d'état thermique apte à mesurer au moins une grandeur thermique relative à l'état thermique d'au moins un occupant dudit véhicule, tel qu'un capteur infrarouge. En particulier, la cartographie infrarouge du visage (nez, joues, front) constitue une donnée riche et robuste et permet une mesure du confort sur des grandeurs thermo-physiologiques directement représentatives du ressenti du confort.

Ledit au moins un capteur d'état thermique peut comporter au moins une caméra sensible aux longueurs d'ondes situées dans le spectre infrarouge moyen.

En variante ou en complément, ledit au moins un capteur d'état thermique peut comporter au moins une caméra sensible aux longueurs d'ondes situées dans le spectre visible et/ou dans le spectre infrarouge proche.

Selon un exemple de réalisation, ledit au moins un capteur comporte un nombre prédéterminé de capteurs de l'environnement thermique dans l'habitacle dudit véhicule. Le dispositif de commande est apte à utiliser les mesures des capteurs de l'environnement thermique pour la détermination d'au moins une donnée de confort thermique de l'occupant.

Par exemple, les capteurs de l'environnement thermique dans l'habitacle sont aptes à mesurer au moins une grandeur choisie parmi des paramètres aérothermiques, la température de la surface d'un équipement dans le véhicule, tel qu'au moins un siège ou le volant ou encore au moins une vitre, une différence de température entre l'intérieur et l'extérieur de l'habitacle, la température intérieure moyenne dans l'habitacle, le flux solaire. Les capteurs de l'environnement thermique dans l'habitacle peuvent également détecter le fonctionnement d'un équipement permettant de réguler l'état thermique.

Selon un mode de réalisation préféré, le dispositif de commande comprend au moins un moyen de traitement pour déterminer ladite au moins une donnée de confort thermique de l'occupant à l'aide d'un algorithme fonctionnant sur la base d'un modèle de confort choisi comprenant au moins un modèle thermo-physiologique basé sur le ressenti

En particulier, le système de gestion du confort thermique des passagers est apte à utiliser et combiner les mesures relatives à l'état thermique de l'occupant, par exemple les mesures de l'émission infrarouge des passagers, combiné à l'exploitation du modèle de confort thermique choisi, pour quantifier et prédire le ressenti de confort d'un ou plusieurs occupants du véhicule.

Selon un aspect de l'invention, les premier et deuxième équipements permettent des échanges thermiques de nature différente, par exemple par convexion, ou par rayonnement, ou par conduction. L'activation d'au moins deux équipements du véhicule permettant des échanges thermiques de nature différente - convectives, radiatives ou par contact - permet d'apporter localement les flux thermiques nécessaires à la mise en œuvre du confort thermique.

Selon un exemple de réalisation, au moins un actionneur est configuré pour le réglage d'au moins un paramètre aérothermique d'un équipement d'une installation de chauffage, ventilation et/ou climatisation dudit véhicule, tel que la température, le débit et la distribution d'un flux d'air à destination de l'habitacle.

Selon un exemple de réalisation, au moins un actionneur est configuré pour le réglage d'au moins un paramètre thermique d'un équipement prévu dans l'habitacle dudit véhicule, tel qu'une vitre, le volant, un siège, de manière à réguler l'état thermique de l'occupant au niveau d'une partie du corps donnée.

Il s'agit par exemple de modifier la température de surface de l'équipement donné.

Selon un autre aspect de l'invention, une des différentes parties du corps de l'occupant est au moins une zone du visage, la nuque, au moins une épaule, le torse, le dos, au moins une main, au moins un bras, au moins une jambe, au moins un pied et/ou une cheville.

Selon un autre aspect de l'invention, le système de gestion thermique comprend au moins un moyen de repérage apte à localiser au moins une partie du corps de l'occupant dans l'espace. Le moyen de repérage est par exemple apte à utiliser les mesures effectuées par ledit au moins un capteur, notamment ledit au moins un capteur d'état thermique, pour localiser au moins une partie du corps de l'occupant dans l'espace.

Avantageusement, le moyen de repérage est apte à déterminer la position du corps de l'occupant. Un des avantages de l'invention est de pouvoir s'adapter à l'évolution des usages automobiles, en particulier le fait que les passagers pourront adopter des positions différentes dans l'habitacle lorsque le véhicule aura une conduite de plus en plus autonome. Par exemple, dans le cas d'une conduite autonome, les occupants peuvent avoir leurs têtes tournées l'un vers l'autre pour discuter.

Selon un mode de réalisation, ledit au moins un capteur est apte à capturer au moins une image ou séquence d'images avantageusement infrarouge et/ou combinées à au moins une image dans le domaine visible, et le moyen de repérage comprend au moins un moyen de traitement d'image pour localiser au moins une partie du corps de l'occupant à partir des captures d'image(s) et avantageusement aussi déterminer la position de l'occupant.

L'identification de la position du corps de l'occupant est avantageusement utilisée pour contrôler le type et la localisation des équipements formant sources thermiques à activer ou régler. L'invention offre ainsi une certaine souplesse dans la mise en œuvre des sources thermiques dans la perspective véhicule autonome.

L'invention concerne également un procédé de gestion thermique mis en œuvre par un système de gestion thermique tel que défini ci-dessus, le procédé de gestion thermique comprenant les étapes suivantes :
- acquisition de mesure(s) d'au moins une grandeur utilisable pour la détermination d'au moins une donnée de confort thermique représentative de l'état thermique d'au moins un occupant dudit véhicule,
- détermination d'au moins une donnée de confort thermique en fonction de ladite au moins une grandeur mesurée,
- en fonction de ladite au moins une donnée de confort thermique déterminée, identification de la nécessité de réguler l'état thermique de l'occupant, caractérisé en ce que lorsqu'une régulation de l'état thermique de l'occupant est nécessaire, ledit procédé de gestion thermique comprend en outre les étapes suivantes :
- détermination d'au moins une première partie et une deuxième partie différentes du corps de l'occupant sur lesquelles agir pour réguler l'état thermique de l'occupant,
- pour chaque partie du corps déterminée à l'étape, identification d'un équipement associé permettant d'agir sur cette partie du corps,
- commande d'au moins un premier actionneur configuré pour le réglage d'au moins un paramètre d'un premier équipement associé apte à agir sur la première partie du corps de l'occupant, et un deuxième actionneur configuré pour le réglage d'au moins un paramètre d'un deuxième équipement associé apte à agir sur la deuxième partie du corps de l'occupant de manière différentiée par rapport au premier équipement.

Ainsi, le procédé de gestion thermique permet de réguler le confort de chaque occupant à partir d'une mesure du ressenti de confort, par exemple au travers de sa « signature » infrarouge (au niveau de sa tête et/ou de ses mains) mesurée en temps réel, en apportant localement des flux thermiques avantageusement de différentes natures sur différentes parties du corps de l'occupant.

Selon un aspect de l'invention, ledit procédé de gestion thermique comprend en outre une étape d'acquisition d'au moins une information temporelle concernant le scénario d'usage dudit véhicule, et prend en compte ladite au moins une information temporelle pour la détermination des parties du corps sur lesquelles agir pour réguler l'état thermique de l'occupant.

Selon un autre aspect de l'invention, des signaux de commande pour la commande desdits actionneurs sont générés.

Les signaux de commande SC comprennent avantageusement au moins une information de localisation des équipements à contrôler.

Selon un mode de réalisation, les signaux de commande comprennent au moins une information de puissance de l'équipement associé.

Selon un mode de réalisation, les signaux de commande comprennent au moins une donnée de temporisation prédéfinie. Il peut s'agir d'une durée prédéfinie pour la mise en œuvre d'un équipement donné. En variante ou en complément, il peut s'agir d'une condition de neutralité thermique atteinte, c'est-à-dire que l'occupant n'a ni chaud ni froid, par exemple on peut prévoir de mettre en œuvre l'équipement jusqu'à ce que la donnée de confort thermique déterminée soit représentative d'un état de neutralité thermique de l'occupant.

En particulier, les signaux de commande peuvent comprendre une information combinée comprenant une durée prédéfinie pour la mise en œuvre de cet équipement à une puissance définie suivi d'un abaissement de la puissance de cet équipement. En variante ou en complément, on peut prévoir d'abaisser la puissance de l'équipement lorsque la donnée de confort thermique déterminée est représentative d'un état de neutralité thermique de l'occupant.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un système de gestion thermique selon l'invention pour véhicule automobile,
- la figure 2 représente de façon schématique le corps d'un occupant du véhicule et l'actionneur correspondant du système de gestion thermique à commander selon la partie du corps ou zone corporelle de l'occupant du véhicule, et
- la figure 3 montre une représentation schématique des étapes d'un procédé de gestion thermique mis en œuvre par le système de gestion thermique.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

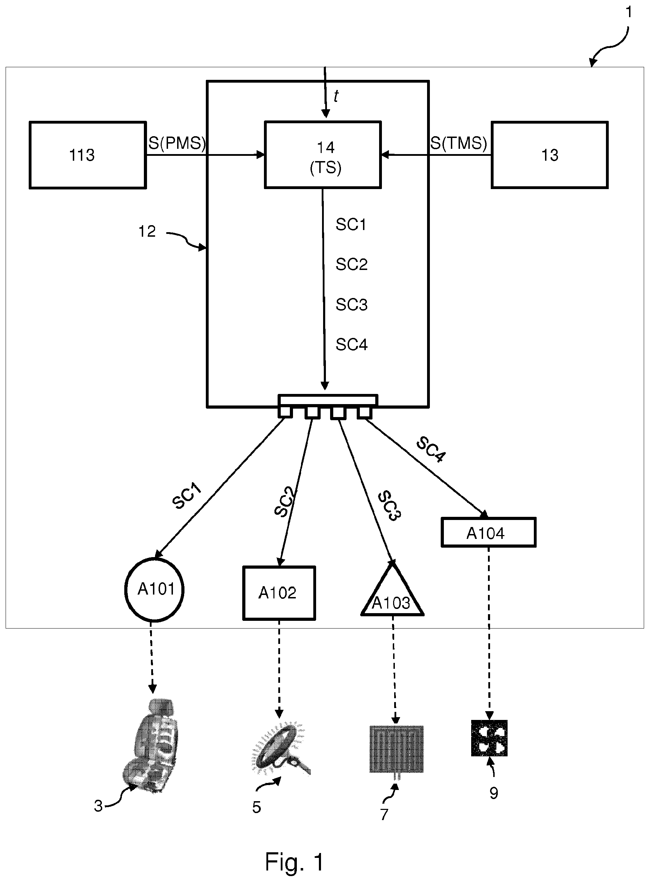

L'invention concerne la gestion du confort thermique notamment dans un habitacle d'un véhicule automobile à l'aide d'un système de gestion thermique 1 pour véhicule automobile schématisé sur la figure 1.

De façon connue, un véhicule comprend plusieurs équipements 3, 5, 7, 9 permettant des échanges thermiques pour influer sur l'état thermique d'un ou plusieurs occupants du véhicule. Un passager ou le conducteur du véhicule est désigné sous le terme générique d'occupant.

Ces équipements 3, 5, 7, 9 sont aussi appelés des sources thermiques. On entend par « source thermique » que ces équipements permettent de délivrer du chaud et/ou du froid sous forme d'un flux thermique.

Ces différents équipements 3, 5, 7, 9 ou sources thermiques du véhicule sont généralement de nature différente, c'est-à-dire qu'ils permettent des échanges thermiques suivant des phénomènes de nature différente faisant intervenir des flux thermiques différents. On peut citer à titre d'exemple, des flux thermiques :
- convectifs sur l'air,
- radiatifs, provenant du soleil ou de surfaces radiantes, telles qu'une planche de bord chaude ou une vitre froide, ou
- conductifs, provenant des surfaces en contact avec les occupants du véhicule, telles qu'un siège ou le volant. On peut ainsi agir au plus près de l'occupant pour réguler son état thermique, c'est-à-dire s'il a chaud ou froid.

### Système de gestion thermique

Le système de gestion thermique 1 pour véhicule automobile, comporte :
- un nombre prédéfini d'actionneurs A101, A102, A103, A104 respectivement associés à un ou plusieurs équipements 3, 5, 7, 9 dans le véhicule,
- un dispositif de commande 12 des actionneurs A101, A102, A103, A104, et
- au moins un capteur 13, 113 apte à communiquer avec le dispositif de commande 12 pour permettre la commande d'au moins certains des actionneurs A101, A102, A103, A104 en fonction des mesures du ou des capteurs 13, 113.

Dans l'exemple schématisé sur la figure 1, quatre actionneurs A101 à A104 sont représentés. Bien entendu plus d'actionneurs ou seulement deux ou trois actionneurs peuvent être prévus.

Les actionneurs A101 à A104 agissent sur ou contrôlent respectivement un équipement 3, 5, 7, 9 du véhicule associé, de manière à activer ou modifier un paramètre de fonctionnement de cet équipement 3, 5, 7, 9 pour réguler l'état thermique de l'occupant, plus précisément d'une partie respective associée du corps de l'occupant.

Les actionneurs A101 à A104 sont donc respectivement configurés pour le réglage d'au moins un paramètre d'un équipement associé 3, 5, 7, 9, ce paramètre étant apte à agir sur la régulation de l'état thermique de l'occupant. En particulier, on peut prévoir au moins :
- un premier actionneur configuré pour le réglage d'au moins un paramètre d'un premier équipement associé apte à réguler l'état thermique de l'occupant au niveau d'une première partie du corps de l'occupant, et
- un deuxième actionneur configuré pour le réglage d'au moins un paramètre d'un deuxième équipement associé apte à réguler l'état thermique de l'occupant au niveau d'une deuxième partie du corps de l'occupant différente de la première partie du corps de l'occupant.

Au moins un ou certains actionneurs A104 peuvent permettre le réglage d'au moins un paramètre aérothermique du flux d'air dans une installation de conditionnement d'air, à savoir de chauffage, de ventilation et/ou de climatisation du véhicule (non représentée sur les figures). Les paramètres aérothermiques généralement utilisés dans une installation de ventilation, de chauffage et/ou de climatisation, sont la température du flux d'air, le taux d'humidité, le débit du flux d'air et/ou la distribution du flux d'air dans l'habitacle. À titre d'exemple, le brevet FR 2 917 855 décrit la gestion thermique en agissant sur des paramètres aérothermiques dans une installation de conditionnement d'air d'un véhicule automobile.

De plus, au moins un ou certains actionneurs A101, A102, A103 peuvent permettre le réglage d'au moins un paramètre d'un équipement prévu dans l'habitacle dudit véhicule, tel qu'une vitre, ou un siège 3, ou le volant 5, ou un panneau radiant 7, de manière à réguler l'état thermique de l'occupant localement au niveau d'une partie de son corps donnée.

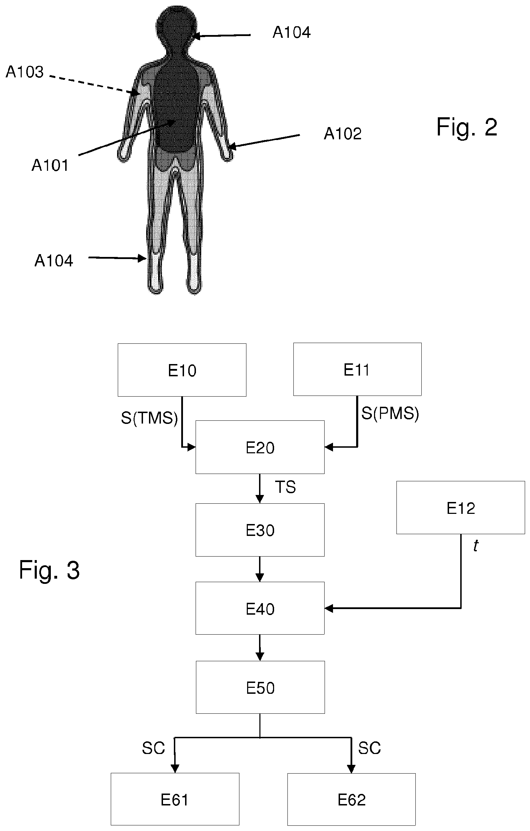

À titre d'exemple illustratif et non limitatif, en référence aux figures 1 et 2 :
- l'actionneur A101 permet le réglage d'au moins un paramètre d'un siège 3, par exemple la température du siège 3, qui permet de réguler la température de l'occupant au niveau de son dos,
- l'actionneur A102 permet le réglage d'au moins un paramètre du volant 5, par exemple la température du volant 5, qui permet de réguler la température de l'occupant au niveau d'une main ou de ses deux mains,
- l'actionneur A103 permet le réglage d'au moins un paramètre d'au moins un panneau radiant 7 ou radiateur,
- l'actionneur A104 permet le réglage d'au moins un paramètre aérothermique de l'installation de chauffage, de ventilation et/ou de climatisation, par exemple du flux d'air sortant par un ou plusieurs aérateurs 9 dans une zone donnée ou en différents lieux de l'habitacle.

Le dispositif de commande 12 est quant à lui apte à déterminer au moins une donnée de confort thermique ou sensation thermique TS de l'occupant en fonction des mesures du capteur ou des capteurs 13, 113, et apte à utiliser la donnée de confort thermique TS pour la commande des actionneurs A101, A102, A103, A104. Plus précisément, le dispositif de commande 12 est apte à commander de manière différenciée au moins deux actionneurs parmi les actionneurs A101 à A104, pour réguler séparément et localement l'état thermique au niveau d'au moins deux différentes parties du corps de l'occupant.

Le capteur comprend avantageusement un capteur d'état thermique 13 apte à mesurer au moins une grandeur thermique relative à l'état thermique d'au moins un occupant dudit véhicule, c'est-à-dire une grandeur permettant de définir par la suite si l'occupant se situe dans une zone de confort thermique prédéfinie, autrement dit dans une zone de neutralité thermique pour l'occupant c'est-à-dire que l'occupant n'a ni chaud ni froid. La grandeur thermique concerne toute grandeur révélatrice d'un ressenti thermique, c'est-à-dire si l'occupant a chaud, froid, ou se situe dans la zone de confort thermique.

Avantageusement, le capteur d'état thermique 13 est apte à réaliser une mesure directe qui porte sur l'occupant lui-même.

En particulier, le capteur d'état thermique 13 peut mesurer une ou plusieurs grandeurs thermiques liées à différentes zones corporelles ou parties du corps de l'occupant. Les différentes parties du corps de l'occupant sont par exemple la tête, ou plus précisément une ou plusieurs zones du visage, la nuque, au moins une épaule, le torse, le dos, au moins une main, au moins un bras, au moins une jambe, au moins un pied et/ou une cheville. Des grandeurs thermiques relatives à toutes ces parties de corps ou en variante seulement à certaines parties de corps peuvent être mesurées.

Le capteur d'état thermique 13 est par exemple un capteur infrarouge. Il s'agit avantageusement d'au moins une caméra infrarouge ou appareil de capture d'images infrarouges ou imageur infrarouge.

Selon un mode de réalisation préféré, le capteur 13 permet de réaliser une cartographie infrarouge du visage de l'occupant, notamment en repérant et en mesurant la température de points remarquables tels que le nez, les joues, le front.

En variante ou en complément, le capteur d'état thermique 13 peut permettre de réaliser une cartographie infrarouge d'au moins une main de l'occupant.

En variante ou en complément, on peut prévoir au moins une caméra ou imageur sensible aux longueurs d'ondes situées dans le spectre visible.

La combinaison d'un imageur infrarouge et d'un imageur dans le domaine visible permet d'enrichir le traitement des données. En effet, une image infrarouge facilite la reconnaissance des parties du corps et le positionnement du corps dans l'image visible. Dans ce cas, les deux images doivent se lire l'une sur l'autre. L'information est alors plus riche que ce que l'on peut avoir par l'un ou par l'autre des imageurs.

En référence à la figure 1, les signaux S(TMS) en provenance du capteur d'état thermique 13 correspondent aux mesures des grandeurs relatives à l'état thermique d'au moins un occupant du véhicule automobile. Dans le cas d'une caméra infrarouge ou d'un appareil de capture d'images infrarouges ou imageur infrarouge, les signaux S(TMS) sont par exemple sous forme d'une séquence d'images ou d'une image infrarouge d'une zone de l'habitacle dans laquelle se trouve l'occupant.

Le capteur d'état thermique 13 est lié au dispositif de commande 12 qui est apte à traiter les signaux S(TMS). Le capteur d'état thermique 13 peut être apte à fournir les signaux S(TMS) au dispositif de commande 12. Pour ce faire, le capteur d'état thermique 13 peut comprendre au moins un moyen de transmission de données au dispositif de commande 12.

En parallèle des mesures de grandeurs relatives à l'état thermique du ou des occupants, d'autres mesures sont avantageusement effectuées, notamment relatives à l'environnement de l'habitacle dans lequel l'occupant du véhicule évolue.

Pour cela, le système de gestion thermique 1 peut comprendre au moins un capteur de l'environnement thermique 113 dans l'habitacle.

Le capteur de l'environnement thermique 113 dans l'habitacle est apte à détecter et/ou mesurer au moins une grandeur choisie parmi notamment :
- le fonctionnement d'équipements permettant la régulation thermique, comme l'activation de la fonction chauffante ou de rafraichissement du siège 3, l'activation de la fonction chauffante du volant 5, le fonctionnement d'un ou plusieurs panneaux radiants 7,
- la température de la surface d'un équipement dans le véhicule, tel qu'au moins un siège 3 ou le volant 5, ou au moins une vitre,
- des paramètres aérothermiques tels que :
   - la température intérieure dans l'habitacle,
   - le débit d'air observé,
   - la distribution d'air observée à travers les aérateurs 9,
   - l'orientation du flux d'air, par exemple si le flux d'air est orienté vers la tête de l'occupant du véhicule,
- la température extérieure à l'habitacle observée,
- une différence de température entre l'intérieur et l'extérieur de l'habitacle,
- le flux solaire,
- le taux d'humidité observé,
- ou encore d'autres données qualifiant l'environnement.

Avantageusement, les données relatives à l'environnement de l'habitacle sont différenciées selon la zone de l'habitacle concernée, par exemple gauche / droite et/ou avant / arrière.

Le capteur de l'environnement thermique 113 peut être un capteur infrarouge, en particulier il peut s'agir du même capteur que le capteur d'état thermique 13. Il s'agit avantageusement d'au moins une caméra infrarouge ou appareil de capture d'images infrarouges. On peut envisager une pluralité de capteurs additionnels de l'environnement thermique 113 en plus de l'imageur infrarouge par exemple, de manière à appréhender au mieux l'environnement thermique.

Le ou chaque capteur de l'environnement thermique 113 est apte à fournir au dispositif de commande 12 des signaux S(PMS). Le capteur de l'environnement thermique 113 est donc relié au dispositif de commande 12.

Le dispositif de commande 12 comprend avantageusement un ou plusieurs moyens de traitement 14 pour :
- recevoir ou acquérir les signaux S(TMS) fournis par le capteur d'état thermique 13, et/ou pour recevoir ou acquérir les signaux S(PMS) fournis par le capteur de l'environnement thermique 113,
- analyser les signaux S(TMS) et/ou S(PMS) pour déterminer au moins une donnée de confort thermique TS de l'occupant.

On entend par « donnée de confort thermique », une donnée d'estimation du ressenti thermique de l'occupant, c'est-à-dire s'il a chaud, froid, ou se situe dans la zone de confort thermique prédéfinie ou zone de neutralité thermique.

Les grandeurs relatives à l'état thermique de l'occupant et avantageusement les caractéristiques de l'environnement thermique entourant l'occupant du véhicule, sont utilisées pour estimer la donnée de confort thermique ou sensation thermique TS perçue par une personne, sur la base du modèle de confort thermique choisi comprenant le modèle thermo-physiologique et un modèle de l'environnement dans le véhicule choisi.

La donnée de confort thermique TS est déterminée, de façon modélisée, à l'aide d'un algorithme fonctionnant sur la base d'un modèle de confort thermique choisi comprenant au moins un modèle thermo-physiologique basé sur le ressenti thermique d'un panel représentatif de la population dont la température corporelle a été mesurée dans différentes conditions.

Le modèle de confort thermique décrit notamment le comportement du corps de l'individu lorsque l'on applique certaines conditions, notamment des conditions limites, par exemple si on applique de la chaleur au niveau de son dos ou si un jet d'air frais arrive au niveau de son visage, et donc la correction à prendre en compte au niveau de l'interprétation de la cartographie infrarouge de son visage par exemple pour déterminer une donnée de confort thermique TS. À partir de cette information de correction et des informations de l'ambiance ou l'environnement thermique dans l'habitacle, le dispositif de commande 12 peut calibrer les mesures, ici infrarouges, que l'on fait préférentiellement au niveau du visage, pour que ces mesures soient exploitables.

À titre d'exemple, le brevet FR 2 917 855 décrit un exemple de modèle thermo-physiologique. Comme décrit dans le brevet FR 2 917 855, il est possible de prendre en compte la catégorie de sensibilité thermique à laquelle appartient l'occupant, à savoir si cette personne a une sensibilité thermique correspondant à la population moyenne ou est plus sensible à la chaleur ou au froid que la population moyenne. Les caractéristiques des vêtements peuvent aussi être utilisées comme décrit dans le brevet FR 2 917 855.

À partir de la donnée ou de données de confort thermique TS, le dispositif de commande 12 est apte à détecter si l'occupant se situe dans la zone de confort thermique prédéfinie. Pour ce faire, le dispositif de commande 12 peut comprendre au moins un moyen de comparaison des données de confort thermique TS à des données de référence ou données cibles prédéfinies. Si ce n'est pas le cas, c'est-à-dire que l'occupant est hors de la zone de confort thermique, par exemple s'il a chaud ou froid, le dispositif de commande détermine qu'une régulation thermique de l'occupant est nécessaire.

Dans ce cas, le dispositif de commande 12 est apte à déterminer des parties du corps sur lequel le système de gestion thermique 1 doit agir.

Par ailleurs, le dispositif de commande 12 comprend avantageusement, parmi les moyens de traitement 14, au moins un moyen de repérage de la position de l'occupant dans l'espace apte à localiser au moins une partie du corps de l'occupant dans l'espace. Le moyen de repérage est apte à utiliser les mesures effectuées par le capteur d'état thermique 13 pour localiser au moins une partie du corps de l'occupant dans l'espace.

Lorsque le capteur d'état thermique 13 est une caméra ou un imageur apte à capturer au moins une image ou séquence d'images, le moyen de repérage peut comprendre au moins un moyen de traitement d'images apte à détecter diverses zones d'une ou de plusieurs image(s) capturée(s) par le capteur d'état thermique 13, et avantageusement apte à détecter également les températures associées à ces zones identifiées. Le moyen de traitement d'image permet d'identifier la position de l'occupant et localiser au moins une partie du corps de l'occupant à partir des captures de la caméra.

Dans le cas d'une caméra ou imageur infrarouge, les éléments chauds sont repérés. L'utilisation d'une caméra ou imageur infrarouge peut avantageusement être combinée à l'utilisation d'une caméra ou imageur sensible aux longueurs d'onde dans le spectre visible pour identifier et localiser la position du corps.

Dans le brevet FR 2 917 855, un exemple est donné de repérage global dans l'espace du visage d'un passager ou du conducteur et de déduction des températures sur les diverses zones du visage repérées. Le repérage dans l'espace du visage d'un occupant du véhicule n'est donc pas détaillé de nouveau dans la présente. Selon un mode de réalisation, suite au repérage dans l'espace du visage, il est possible de déterminer la position du corps.

À titre d'exemple non limitatif, un tel repérage permet notamment de détecter si le conducteur a les mains sur le volant ou si le conducteur ou passager a le visage tourné et dans quelle direction. Cette information peut être utilisée par le dispositif de commande 12 pour déterminer des parties du corps sur lequel le système de gestion thermique 1 doit agir et pour ajuster les commandes de réglage d'un ou plusieurs équipements 3, 5, 7, 9.

Le système de gestion thermique 1 peut également déterminer une donnée de confort thermique TS différente selon le côté droit ou gauche de l'occupant, par exemple du fait d'une exposition directe au soleil d'un de ses côtés.

Le dispositif de commande 12 comprend en outre au moins un moyen de traitement pour identifier, pour chaque partie du corps, un équipement 3, 5, 7, 9 du véhicule à contrôler pour réguler l'état thermique de cette partie du corps et donc les actionneurs A101, A102, A103, A104 à commander. Le dispositif de commande 12 peut alors commander de manière différenciée au moins deux des actionneurs A101 à A104 pour le contrôle des équipements identifiés de manière à réguler l'état thermique de l'occupant en agissant sur différentes parties du corps.

Pour ce faire, le dispositif de commande 12 comprend avantageusement un ou plusieurs moyens de traitement 14 pour :
- à partir de la ou des données de confort thermique TS, définir ou générer au moins deux signaux de commande SC dont au moins un premier signal de commande d'un premier actionneur et au moins un deuxième signal d'un deuxième actionneur, et
- transmettre les signaux de commande SC définis afin de commander de manière différenciée au moins deux des actionneurs A101 à A104, par exemple sur des sorties respectives du dispositif de commande 12.

Dans l'exemple illustré sur la figure 1, quatre signaux de commande SC1, SC2, SC3, SC4 sont représentés de façon schématique. Bien entendu, il peut y avoir moins ou plus de signaux de commande SC.

Lorsque le système de gestion thermique 1 détermine des données de confort thermique TS différentes selon le côté droit ou gauche de l'occupant, cette information est prise en compte par le dispositif de commande 12 pour la définition des signaux de commande SC, par exemple pour ajuster la température de l'air pour chaque côté ou ajuster l'orientation du flux d'air.

De plus, le système de gestion thermique 1 peut comprendre au moins un moyen d'acquisition pour déterminer ou relever une ou plusieurs informations temporelles t ou de séquencement dans le temps d'un scénario d'usage du véhicule. On peut citer en exemple d'information temporelle t, si l'occupant vient d'entrer dans le véhicule, depuis combien de temps l'occupant est assis sur le siège, depuis combien de temps le véhicule est en déplacement, depuis combien de temps un équipement donné pour la régulation thermique, et éventuellement son orientation, est mis en route.

Il peut s'agir d'un module de gestion temporelle du système de gestion thermique 1. En particulier, il peut s'agir d'un moyen de traitement 14 du dispositif de commande 12.

L'ensemble des données temporelles t peuvent être prises en compte par le dispositif de commande 12 pour définir les signaux de commande SC. Le dispositif de commande 12 peut prendre en compte si l'occupant vient d'entrer dans le véhicule ou est dans le véhicule depuis un certain temps pour faire le choix de commander ou non certains équipements, comme par exemple l'activation de la fonction chauffante du siège 3. En effet, afin d'illustrer ce propos, il est constaté par exemple qu'en hiver il est très agréable pour un individu entrant dans un véhicule dont l'environnement habitacle est froid, d'activer le siège chauffant à ce moment, mais qu'une production de chaleur au niveau du dos de l'individu sur un long trajet est très désagréable et est donc perçue comme un inconfort par cet individu.

Les commandes de confort que le dispositif de commande 12 permet de contrôler via les actionneurs A101, A102, A103, A104, concernent, par exemple :
- l'activation de la fonction chauffante du volant 5,
- la température du volant 5,
- l'activation de la fonction chauffante ou rafraîchissante du siège 3 sur lequel se trouve l'occupant,
- la température du siège 3,
- l'activation d'un ou plusieurs panneaux radiants 7,
- l'activation d'une fonction chauffante d'un ou plusieurs vitrages de l'habitacle,
- la température d'un ou plusieurs vitrages de l'habitacle,
- le réglage de l'opacité / de la transparence d'un ou plusieurs vitrages électro-chromes de l'habitacle,
- la température de l'air pulsé vers l'habitacle,
- le taux d'humidité de l'air pulsé vers l'habitacle,
- le débit d'air,
- la distribution d'air pulsé dans l'habitacle à travers les différents aérateurs 9,
- un pourcentage de recirculation de l'air, autrement dit la répartition entre l'air extérieur neuf et l'air recirculant en provenance de l'habitacle,
- la répartition air chaud/air froid dans l'air pulsé vers l'habitacle,
- les vitesses des divers groupes moto-ventilateurs utilisés au sein de l'installation de chauffage, de ventilation et/ou de climatisation.

### Exemples de réalisation :

Ainsi, pour une donnée de confort thermique TS indiquant que l'occupant n'est pas dans la zone de confort thermique prédéfinie, le système de gestion thermique 1 peut mettre en œuvre des actions ayant pour but de réguler l'état thermique de l'occupant en différents endroits de son corps, par exemple pour une durée prédéterminée et/ou jusqu'à ce que la donnée de confort thermique TS indique un état neutre. Autrement dit, le système de gestion thermique 1 apporte des stimuli dits positifs sur différentes parties du corps de l'occupant.

En particulier, les sources thermiques agissant sur différents segments ou parties du corps de l'occupant peuvent être de différentes natures : par exemple convection sur sa tête, rayonnement sur son torse, contact sur ses mains et son dos. Ceci a pour effet d'utiliser d'autres vecteurs que l'air pour focaliser la régulation thermique sur certaines parties du corps de l'occupant.

À titre d'exemple illustratif et non limitatif, pour une donnée de confort thermique TS indiquant que l'occupant a chaud, le système de gestion thermique 1 peut mettre en œuvre des actions ayant pour but de rafraîchir l'occupant en différents endroits de son corps.

Par exemple, le système de gestion thermique 1 peut commander un actionneur A104 pour enclencher un jet d'air fais pour rafraîchir l'occupant par convection au niveau de sa tête. Le système de gestion thermique 1 peut aussi commander l'actionneur A101 pour activer la fonction rafraîchissante du siège 3 sur lequel l'occupant est assis pour rafraîchir l'occupant par contact au niveau de son dos. En parallèle, le système de gestion thermique 1 peut enclencher la climatisation pour le refroidissement de l'air destiné à l'habitable.

Selon un autre exemple, pour une donnée de confort thermique TS indiquant que l'occupant a froid, le système de gestion thermique 1 peut mettre en œuvre des actions ayant pour but de réchauffer l'occupant en différents endroits de son corps. Par exemple, le système de gestion thermique 1 peut commander l'actionneur A103 pour enclencher au moins un panneau radiant 7, pour réchauffer par rayonnement par exemple le torse de l'occupant. Le système de gestion thermique 1 peut aussi commander l'actionneur A101 pour activer la fonction chauffante du siège chauffant 3 sur lequel l'occupant est assis pour réchauffer l'occupant par contact au niveau de son dos. Le système de gestion thermique 1 peut encore commander l'actionneur A102 pour activer la fonction chauffante du volant 5 pour réchauffer l'occupant par contact au niveau de ses mains. En parallèle, le système de gestion thermique 1 peut enclencher le chauffage de l'air destiné à l'habitable.

En variante ou en complément, si le système de gestion thermique 1 détermine une donnée de confort thermique TS différente selon le côté, le dispositif de commande 12 commande les actionneurs de manière à ajuster le confort thermique entre les deux côtés.

On comprend donc que selon la valeur de la ou des données de confort thermique TS, des données de l'environnement habitacle comme notamment la température intérieure de l'habitacle et la température extérieure à l'habitacle, et avantageusement de données temporelles traduisant notamment un séquencement dans le temps d'un scénario d'usage du véhicule, si l'utilisateur vient de rentrer dans le véhicule par exemple, le système de gestion thermique 1 peut commander au moins deux équipements pour agir de manière différentiée sur deux ou plus de parties différentes du corps de l'occupant. Ceci apporte des stimuli positifs localisés sur plusieurs parties du corps de l'occupant permettant ainsi à l'occupant, en particulier dans une situation transitoire, de patienter jusqu'à ce que l'habitacle atteigne une température de confort. En effet, on réduit la sensation d'inconfort de l'occupant en agissant au plus près de lui en utilisant des sources thermiques différentes, par contact, rayonnement ou convection, et non pas simplement en agissant sur l'air de son environnement.

Le système de gestion thermique 1 peut ainsi jouer sur la température du siège, la température du volant, l'opacité ou la transparence d'un vitrage, la température d'un vitrage l'orientation / l'ouverture / la fermeture d'embouts d'aération placés sur le tableau de bord, ou à l'arrière du véhicule automobile, l'ouverture ou la fermeture de volets d'obturation de conduits d'aération, sur l'arrêt ou l'allumage d'un propulseur d'air, sur la mise en marche de la climatisation, sur le débit d'air, sur un dispositif de chauffage de l'installation de chauffage, de ventilation et/ou de climatisation ou encore la proportion d'air recyclé ou venant de l'extérieur. Le système de gestion thermique 1 selon l'invention permet donc de combiner différentes technologies pour réguler l'état thermique de l'occupant.

La gestion thermique peut se faire de manière automatique, en particulier le choix des équipements sur lesquels il faut agir et donc le choix des actionneurs associés sans nécessiter l'intervention de l'occupant. Bien entendu, on peut prévoir la possibilité pour l'occupant de choisir ou modifier au moins un paramètre donné par exemple via une interface homme-machine. L'occupant peut en particulier ajuster un réglage en fonction de sa sensibilité thermique.

Enfin, le système de gestion thermique 1 peut avoir un mode de fonctionnement dit dégradé, notamment dans le cas où le système de gestion thermique 1 ne peut pas réaliser au moins certaines mesures nécessaires pour la prédiction d'une donnée de confort thermique TS de l'occupant. Ce mode de fonctionnement dégradé peut se baser sur un modèle prédictif statistique qui permet un réglage par défaut d'au moins deux équipements par exemple selon les conditions extérieures. Avec ce mode dégradé, on peut également prévoir la possibilité que l'occupant choisisse ou modifie au moins un paramètre donné.

### Procédé de gestion thermique

L'invention concerne aussi un procédé de gestion thermique mis en œuvre par un système de gestion thermique 1 pour véhicule automobile tel que défini précédemment.

En référence à la figure 3, le procédé de gestion thermique comporte différentes étapes E10 à E62 décrites ci-après.

Le procédé de gestion thermique comprend notamment une étape E10 d'acquisition de mesure(s) d'une ou plusieurs grandeurs thermiques relatives à l'occupant, par exemple respectivement liées à une partie ou zone corporelle différente d'un occupant du véhicule automobile. Cette étape E10 d'acquisition est, selon le mode de réalisation décrit, réalisée par le capteur d'état thermique 13.

Selon un mode de réalisation préféré, l'étape E10 est une étape de capture d'au moins une image ou séquence d'images dans le spectre infrarouge et/ou dans le spectre visible.

On peut prévoir une étape de transmission de signaux S(TMS) correspondant aux mesures des grandeurs thermiques relatives à l'état thermique de l'occupant réalisées, par exemple, par le capteur d'état thermique 13.

Le procédé de gestion thermique peut comprendre de plus une étape E11 d'acquisition de mesure(s) relatives à l'ambiance thermique de l'environnement de l'occupant. Cette étape E11 d'acquisition peut être réalisée par le même dispositif que pour l'étape E10, tel qu'un imageur infrarouge, et/ou par un ou plusieurs autre(s) capteur(s) de l'environnement thermique dans l'habitacle 113.

On peut prévoir une étape de transmission de signaux S(PMS) correspondant aux mesures des grandeurs thermiques relatives à l'environnement réalisées, par exemple par le ou chaque capteur de l'environnement thermique dans l'habitacle 113.

Le procédé de gestion thermique comprend avantageusement également une étape E12 d'acquisition d'au moins une information temporelle *t* concernant le scénario d'usage du véhicule, par exemple de façon non limitative si l'occupant vient d'entrer dans le véhicule ou depuis combien de temps il est dans le véhicule. Cette étape E12 d'acquisition d'au moins une information temporelle *t* peut être réalisée par un module de gestion temporelle du système de gestion thermique 1, dans ce cas la ou les informations temporelles *t* peuvent être transmises au dispositif de commande 12. En variante, cette étape E12 d'acquisition d'au moins une information temporelle *t* peut être réalisée par au moins un moyen de traitement 14 du dispositif de commande 12.

Le procédé de gestion thermique comprend en outre une étape E20 de détermination d'au moins une donnée de confort thermique TS de l'occupant en fonction des grandeurs mesurées. Il s'agit notamment des grandeurs relatives à l'état thermique de l'occupant du véhicule mesurées par le capteur d'état thermique 13. En complément, il peut s'agir également des grandeurs relatives à l'environnement thermique mesurées par le ou les capteurs de l'environnement thermique 113.

Pour cela, l'étape E20 de détermination comprend au moins :
- une sous-étape de réception ou d'acquisition des signaux S(TMS) et/ou S(PMS) par exemple par le dispositif de commande 12 du système de gestion thermique 1,
- une sous-étape de traitement et d'analyse des signaux S(TMS) et/ou S(PMS), en vue de déterminer au moins une donnée de confort thermique TS relative à l'occupant.

Selon un mode de réalisation préféré, l'étape E20 comprend une sous-étape d'analyse d'une image ou séquence d'images et de repérage de points remarquables par exemple du visage de l'occupant pour identifier la température au niveau de ces points remarquables.

Avantageusement, l'étape E20 comprend une sous-étape de repérage du corps de l'occupant dans l'espace.

Avantageusement, l'étape E20 comprend une sous-étape de détermination de la position de l'occupant dans le véhicule, par exemple l'orientation du visage de l'occupant ou si le conducteur a une ou ses deux mains sur le volant.

Lors d'une étape E30 le procédé de gestion thermique permet d'identifier si l'occupant nécessite une régulation thermique à partir de la ou des données de confort thermique TS déterminées à l'étape E20, par exemple par comparaison de la ou chaque donnée de confort thermique TS à une donnée de référence ou cible prédéfinie.

Lorsqu'une régulation thermique est nécessaire, le procédé de gestion thermique détermine à l'étape E40 au moins deux parties du corps de l'occupant sur lesquelles agir.

Pour la détermination des parties du corps de l'occupant sur lesquelles il faut agir localement, le procédé de gestion thermique prend avantageusement compte de la position de l'occupant dans le véhicule.

Le procédé de gestion thermique prend également avantageusement en compte l'ensemble des informations temporelles *t* concernant le scénario d'usage du véhicule.

À l'étape E50, le procédé de gestion thermique identifie, parmi les équipements dans le véhicule, l'équipement associé à commander pour agir sur chaque partie déterminée à l'étape E40. En particulier, le procédé de gestion thermique permet d'identifier au moins un premier équipement associé à une première partie du corps de l'occupant, et au moins un deuxième équipement associé à une deuxième partie du corps de l'occupant. Les équipements identifiés sont avantageusement des sources thermiques de nature différente.

Une fois les équipements à commander identifiés, le procédé de gestion thermique permet de générer ou définir des signaux de commande SC à destination des actionneurs permettant respectivement le contrôle de ces équipements. Ces signaux de commande SC sont configurés pour le réglage d'au moins un paramètre d'au moins deux équipements du véhicule en fonction de la ou des données de confort thermique TS de l'occupant.

Les signaux de commande SC comprennent avantageusement au moins une information de localisation des équipements à contrôler.

Les signaux de commande SC peuvent comprendre également au moins une information de puissance de l'équipement à contrôler.

Pour la définition des signaux de commande SC, le procédé de gestion thermique prend avantageusement compte de la position de l'occupant dans le véhicule, afin d'ajuster le réglage des équipements en fonction de cette position de l'occupant. À titre d'exemple non limitatif, si l'occupant a la tête tournée dans une certaine direction, un signal de commande SC4 est envoyée à un actionneur A104 pour contrôler l'orientation du flux d'air à travers un aérateur 9 donné.

Ainsi, dans une étape E61, au moins un premier signal de commande est défini et envoyé à un premier actionneur configuré pour le réglage d'au moins un paramètre d'un premier équipement associé apte à réguler l'état thermique de l'occupant au niveau d'une première partie du corps de l'occupant.

Dans une étape E62, au moins un deuxième signal de commande est défini et envoyé à un deuxième actionneur configuré pour le réglage d'au moins un paramètre d'un deuxième équipement associé apte à réguler l'état thermique de l'occupant au niveau d'une deuxième partie du corps de l'occupant différente de la première partie du corps de l'occupant.

Ceci permet de réguler de manière différentiée l'état thermique de l'occupant au niveau de différentes parties de son corps.

Selon un mode de réalisation, les signaux de commande SC peuvent comprendre au moins une donnée de temporisation prédéfinie. À titre d'exemple non limitatif, l'action locale sur une partie ou zone corporelle donnée en activant ou en réglant un équipement associé peut être mise en œuvre pour une durée prédéfinie. Selon un autre exemple, au bout d'une durée prédéfinie, on abaisse la puissance d'un ou plusieurs équipements donnés.

En variante ou en complément, la donnée de temporisation peut comprendre une condition de neutralité thermique atteinte, autrement dit l'action locale sur une partie ou zone corporelle donnée de l'occupant en activant ou en réglant un équipement associé peut durer jusqu'à ce que l'occupant soit dans la zone de confort thermique prédéfinie. Dans ce cas, les étapes E10 à E20 peuvent être réalisées en parallèle des étapes E61, E62.

Selon un autre exemple, on abaisse la puissance d'un ou plusieurs équipements donnés lorsque l'occupant se situe dans la zone de confort thermique prédéfinie.

Bien entendu, l'ordre d'au moins certaines étapes de ce procédé de gestion thermique peut être interverti.

Ainsi, il est possible, de réaliser un procédé de gestion thermique pour lequel un ou plusieurs moyens de mesures ou capteurs 13, 113, notamment infrarouges peuvent être utilisés, et dans lequel les mesures effectuées par ces capteurs 13, 113, sont utilisés pour définir les signaux de commande SC envoyés vers les actionneurs A101, ..., A104, d'équipements dans l'habitacle ou de l'installation de chauffage, ventilation et/ou climatisation, de manière à agir de façon différenciée sur différents segments du corps de l'occupant selon la ou les données de confort thermique TS de l'occupant déterminées.

Une gestion avantageuse du confort est de combiner et enchainer l'application des flux thermiques de façon localisée sur différentes parties ou zones corporelles de l'occupant et la gestion de manière globale de la température dans l'habitacle, afin d'assurer le meilleur ressenti de confort possible dans différentes phases d'utilisation d'un véhicule.

## Revendications

1. Système de gestion thermique (1) pour véhicule automobile, ledit véhicule comprenant au moins deux équipements (3, 5, 7, 9), ledit système de gestion thermique (1) comportant :
- au moins un capteur (13, 113) apte à mesurer au moins une grandeur utilisable pour la détermination d'au moins une donnée de confort thermique (TS) représentative de l'état thermique d'au moins un occupant dudit véhicule,
- un nombre prédéfini d'actionneurs (A101, A102, A103, A104) respectivement configurés pour le réglage d'au moins un paramètre d'un équipement (3, 5, 7, 9) associé apte à réguler l'état thermique de l'occupant, et
- un dispositif de commande (12) des actionneurs (A101, A102, A103, A104) apte à :
• en fonction des mesures dudit au moins un capteur (13, 113), déterminer au moins une donnée de confort thermique (TS), et apte à
• utiliser ladite au moins une donnée de confort thermique (TS) pour déterminer si une régulation thermique est nécessaire et pour la commande des actionneurs (A101, A102, A103, A104),
le dispositif de commande (12) comprenant au moins un moyen de traitement (14) pour, en fonction de ladite au moins une donnée de confort thermique (TS) :
- identifier au moins un premier équipement (3, 5, 7, 9) permettant d'agir sur une première partie du corps de l'occupant et un deuxième équipement (3, 5, 7, 9) permettant d'agir sur une deuxième partie du corps de l'occupant lorsqu'une régulation thermique est nécessaire, et
- commander au moins un premier actionneur configuré pour le réglage d'au moins un paramètre du premier équipement identifié et un deuxième actionneur configuré pour le réglage d'au moins un paramètre du deuxième équipement identifié, de manière à agir sur lesdites parties du corps de l'occupant,
**caractérisé en ce que** ledit au moins un capteur (13,113) comporte au moins un capteur d'état thermique (13) apte à mesurer au moins une grandeur thermique relative à l'état thermique d'au moins un occupant dudit véhicule, tel qu'un capteur infrarouge.

2. Système de gestion thermique (1) selon la revendication précédente, dans lequel la première partie du corps de l'occupant et la deuxième partie du corps de l'occupant sont différentes, le système de gestion thermique pouvant agir de façon différentiée sur les différentes parties du corps de l'occupant.

3. Système de gestion thermique (1) selon la revendication 1 ou 2, comprenant un moyen d'acquisition d'au moins une information temporelle (*t*) d'un scénario d'usage dudit véhicule, ladite au moins une information temporelle (*t*) étant utilisable pour l'identification desdits équipements à contrôler pour réguler localement l'état thermique de l'occupant sur les parties de son corps.

4. Système de gestion thermique (1) selon l'une des revendications précédentes, dans lequel ledit au moins un capteur (13, 113) comporte un nombre prédéterminé de capteurs de l'environnement thermique dans l'habitacle (113) dudit véhicule.

5. Système de gestion thermique (1) selon l'une quelconque des revendications précédentes, dans lequel le dispositif de commande (12) comprend au moins un moyen de traitement pour déterminer ladite au moins une donnée de confort thermique (TS) à l'aide d'un algorithme fonctionnant sur la base d'un modèle de confort choisi comprenant au moins un modèle thermo-physiologique basé sur le ressenti thermique d'un panel représentatif de la population dont la température corporelle a été mesurée dans différentes conditions.

6. Système de gestion thermique (1) selon l'une quelconque des revendications précédentes, dans lequel les premier et deuxième équipements permettent des échanges thermiques de nature différente, par exemple par convexion, ou par rayonnement, ou par conduction.

7. Système de gestion thermique (1) selon l'une quelconque des revendications précédentes, dans lequel au moins un actionneur (A104) est configuré pour le réglage d'au moins un paramètre aérothermique d'un équipement (9) d'une installation de chauffage, ventilation et/ou climatisation dudit véhicule, tel que la température, le débit et la distribution d'un flux d'air à destination de l'habitacle.

8. Système de gestion thermique (1) selon l'une quelconque des revendications précédentes, dans lequel au moins un actionneur (A101, A102) est configuré pour le réglage d'au moins un paramètre thermique d'un équipement (3, 5) prévu dans l'habitacle dudit véhicule, tel qu'une vitre, le volant, un siège, de manière à réguler l'état thermique de l'occupant au niveau d'une partie du corps donnée.

9. Système de gestion thermique (1) selon l'une quelconque des revendications précédentes, dans lequel une des différentes parties du corps de l'occupant est au moins une zone du visage, la nuque, au moins une épaule, le torse, le dos, au moins une main, au moins un bras, au moins une jambe, au moins un pied et/ou une cheville.

10. Système de gestion thermique (1) selon l'une quelconque des revendications précédentes, comprenant au moins un moyen de repérage apte à localiser au moins une partie du corps de l'occupant dans l'espace, en utilisant les mesures effectuées par ledit au moins un capteur (13).

11. Système de gestion thermique (1) selon la revendication précédente, dans lequel :
- ledit au moins un capteur (13) est apte à capturer au moins une image ou séquence d'images, et dans lequel
- le moyen de repérage comprend au moins un moyen de traitement d'image pour localiser au moins une partie du corps de l'occupant à partir des captures d'image(s) et déterminer la position de l'occupant.

12. Procédé de gestion thermique mis en œuvre par un système de gestion thermique (1) pour véhicule automobile selon l'une quelconque des revendications précédentes, le procédé de gestion thermique comprenant les étapes suivantes :
- acquisition de mesure(s) (E10, E11) d'au moins une grandeur utilisable pour la détermination d'au moins une donnée de confort thermique (TS) représentative de l'état thermique d'au moins un occupant dudit véhicule, l'étape (E10) étant une étape d'acquisition de mesure(s) d'une ou plusieurs grandeurs thermiques relatives à ledit au moins un occupant, l'étape (E10) étant réalisée par ledit capteur d'état thermique (13) du système de gestion thermique (1),
- détermination (E20) d'au moins une donnée de confort thermique (TS) en fonction de ladite au moins une grandeur mesurée,
- en fonction de ladite au moins une donnée de confort thermique (TS) déterminée, identification (E30) de la nécessité de réguler l'état thermique de l'occupant,
**caractérisé en ce que** lorsqu'une régulation de l'état thermique de l'occupant est nécessaire, ledit procédé de gestion thermique comprend en outre les étapes suivantes :
- détermination (E40) d'au moins une première partie et une deuxième partie différentes du corps de l'occupant sur lesquelles agir pour réguler l'état thermique de l'occupant,
- pour chaque partie du corps déterminée à l'étape (E40), identification (E50) d'un équipement (3, 5, 7, 9) associé permettant d'agir sur cette partie du corps,
- commande (E61, E62) d'au moins :
• un premier actionneur configuré pour le réglage d'au moins un paramètre d'un premier équipement associé apte à agir sur la première partie du corps de l'occupant, et
• un deuxième actionneur configuré pour le réglage d'au moins un paramètre d'un deuxième équipement associé apte à agir sur la deuxième partie du corps de l'occupant de manière différentiée par rapport au premier équipement.

13. Procédé de gestion thermique selon la revendication précédente, comprenant en outre une étape (E12) d'acquisition d'au moins une information temporelle (*t*) concernant le scénario d'usage dudit véhicule, et dans lequel le procédé de gestion thermique prend en compte ladite au moins une information temporelle (*t*) pour la détermination (E40) des parties du corps sur lesquelles agir pour réguler l'état thermique de l'occupant.

14. Procédé de gestion thermique selon l'une des revendications 12 ou 13, dans lequel des signaux de commande (SC) sont générés pour la commande desdits actionneurs et comprennent au moins une information de puissance de l'équipement associé.

15. Procédé de gestion thermique selon l'une quelconque des revendications 12 à 14, dans lequel des signaux de commande (SC) sont générés pour la commande desdits actionneurs et comprennent au moins une donnée de temporisation prédéfinie, telle qu'une durée prédéfinie ou une condition de neutralité thermique atteinte.

## Patentansprüche

1. Wärmeverwaltungssystem (1) für ein Kraftfahrzeug, wobei das Fahrzeug mindestens zwei Ausrüstungen (3, 5, 7, 9) umfasst, wobei das Wärmeverwaltungssystem (1) beinhaltet:
- mindestens einen Sensor (13, 113), der geeignet ist, mindestens eine Größe zu messen, die zur Bestimmung mindestens eines Datenwerts für die thermische Behaglichkeit (TS) verwendbar ist, der für den thermischen Zustand mindestens eines Insassen des Fahrzeugs repräsentativ ist,
- eine vorgegebene Anzahl von Aktoren (A101, A102, A103, A104), die jeweils zur Regelung mindestens eines Parameters einer zugeordneten Ausrüstung (3, 5, 7, 9) konfiguriert sind, die geeignet ist, den thermischen Zustand des Insassen zu regulieren, und
- eine Steuervorrichtung (12) zum Steuern der Aktoren (A101, A102, A103, A104), die geeignet ist:
• in Abhängigkeit von den Messungen des mindestens einen Sensors (13, 113) mindestens einen Datenwert für die thermische Behaglichkeit (TS) zu bestimmen, und geeignet ist,
• den mindestens einen Datenwert für die thermische Behaglichkeit (TS) zu verwenden, um zu bestimmen, ob eine thermische Regulierung erforderlich ist, und zur Steuerung der Aktoren (A101, A102, A103, A104), wobei die Steuervorrichtung (12) mindestens ein Verarbeitungsmittel (14) umfasst, um in Abhängigkeit von dem mindestens einen Datenwert für die thermische Behaglichkeit (TS):
- mindestens eine erste Ausrüstung (3, 5, 7, 9) zu ermitteln, die es ermöglicht, auf einen ersten Teil des Körpers des Insassen einzuwirken, und eine zweite Ausrüstung (3, 5, 7, 9), die es ermöglicht, auf einen zweiten Teil des Körpers des Insassen einzuwirken, wenn eine thermische Regulierung erforderlich ist, und
- mindestens einen ersten Aktor zu steuern, der zur Regelung mindestens eines Parameters der ersten ermittelten Ausrüstung konfiguriert ist, und einen zweiten Aktor, der zur Regelung mindestens eines Parameters der zweiten ermittelten Ausrüstung konfiguriert ist, so dass auf die Teile des Körpers des Insassen eingewirkt wird,
**dadurch gekennzeichnet, dass** der mindestens eine Sensor (13, 113) mindestens einen Sensor für den thermischen Zustand (13) beinhaltet, der geeignet ist, mindestens eine thermische Größe bezüglich des thermischen Zustands mindestens eines Insassen des Fahrzeugs zu messen, wie etwa einen Infrarotsensor.

2. Wärmeverwaltungssystem (1) nach dem vorhergehenden Anspruch, bei dem der erste Teil des Körpers des Insassen und der zweite Teil des Körpers des Insassen verschieden sind, wobei das thermische Verwaltungssystem auf differenzierte Weise auf die verschiedenen Teile des Körpers des Insassen einwirken kann.

3. Wärmeverwaltungssystem (1) nach Anspruch 1 oder 2, umfassend ein Mittel zur Erfassung mindestens einer Zeitinformation (t) eines Nutzungsszenarios des Fahrzeugs, wobei die mindestens eine Zeitinformation (t) zur Ermittlung der Ausrüstungen verwendbar ist, die zu überwachen sind, um den thermischen Zustand des Insassen an den Teilen seines Körpers lokal zu regulieren.

4. Wärmeverwaltungssystem (1) nach einem der vorhergehenden Ansprüche, bei dem der mindestens eine Sensor (13, 113) eine vorbestimmte Anzahl von Sensoren für die thermische Umgebung im Innenraum (113) des Fahrzeugs umfasst.

5. Wärmeverwaltungssystem (1) nach einem der vorhergehenden Ansprüche, bei dem die Steuervorrichtung (12) mindestens ein Verarbeitungsmittel umfasst, um den mindestens einen Datenwert für die thermische Behaglichkeit (TS) mithilfe eines Algorithmus zu bestimmen, der auf der Basis eines ausgewählten Behaglichkeitsmodells funktioniert, das mindestens ein thermisch-physiologisches Modell umfasst, das auf dem thermischen Empfinden eines repräsentativen Panels der Bevölkerung basiert, dessen Körpertemperatur unter verschiedenen Bedingungen gemessen worden ist.

6. Wärmeverwaltungssystem (1) nach einem der vorhergehenden Ansprüche, bei dem die erste und die zweite Ausrüstung verschiedene Wärmeaustausche ermöglichen, beispielsweise durch Konvektion oder durch Strahlung oder durch Leitung.

7. Wärmeverwaltungssystem (1) nach einem der vorhergehenden Ansprüche, bei dem mindestens ein Aktor (A104) zur Regelung mindestens eines aerothermischen Parameters einer Ausrüstung (9) einer Heizungs-, Lüftungs- und/oder Klimaanlage des Fahrzeugs wie der Temperatur, des Volumenstroms und der Verteilung eines für den Innenraum bestimmten Luftstroms konfiguriert ist.

8. Wärmeverwaltungssystem (1) nach einem der vorhergehenden Ansprüche, bei dem mindestens ein Aktor (A101, A102) zur Regelung mindestens eines thermischen Parameters einer Ausrüstung (3, 5), die im Innenraum des Fahrzeugs vorgesehen ist, wie einer Scheibe, des Lenkrads, eines Sitzes, konfiguriert ist, so dass der thermische Zustand des Insassen an einem gegebenen Teil des Körpers reguliert wird.

9. Wärmeverwaltungssystem (1) nach einem der vorhergehenden Ansprüche, bei dem einer der verschiedenen Teile des Körpers des Insassen mindestens ein Bereich des Gesichts, der Nacken, mindestens eine Schulter, der Oberkörper, der Rücken, mindestens eine Hand, mindestens ein Arm, mindestens ein Bein, mindestens ein Fuß und/oder ein Knöchel ist.

10. Wärmeverwaltungssystem (1) nach einem der vorhergehenden Ansprüche, umfassend mindestens ein Lokalisierungsmittel, das geeignet ist, mindestens einen Teil des Körpers des Insassen im Raum zu orten, indem die von dem mindestens einen Sensor (13) durchgeführten Messungen verwendet werden.

11. Wärmeverwaltungssystem (1) nach dem vorhergehenden Anspruch, bei dem:
- der mindestens eine Sensor (13) geeignet ist, mindestens ein Bild oder eine Bildsequenz aufzunehmen, und bei dem
- das Lokalisierungsmittel mindestens ein Bildverarbeitungsmittel umfasst, um mindestens einen Teil des Körpers des Insassen anhand der Bildaufnahmen zu orten und die Position des Insassen zu bestimmen.

12. Wärmeverwaltungsverfahren, das von einem Wärmeverwaltungssystem (1) für ein Kraftfahrzeug nach einem der vorhergehenden Ansprüche umgesetzt wird, wobei das Wärmeverwaltungsverfahren die folgenden Schritte umfasst:
- Erfassen einer(mehrerer) Messung(en) (E10, E11) mindestens einer Größe, die zur Bestimmung mindestens eines Datenwerts für die thermische Behaglichkeit (TS) verwendbar ist, der für den thermischen Zustand mindestens eines Insassen des Fahrzeugs repräsentativ ist, wobei der Schritt (E10) ein Schritt des Erfassens einer(mehrerer) Messung(en) einer oder mehrerer thermischer Größen bezüglich des mindestens einen Insassen ist, wobei der Schritt (E10) von dem Sensor für den thermischen Zustand (13) des Wärmeverwaltungssystems (1) ausgeführt wird,
- Bestimmen (E20) mindestens eines Datenwerts für die thermische Behaglichkeit (TS) in Abhängigkeit von der mindestens einen gemessenen Größe,
- in Abhängigkeit von dem mindestens einen bestimmten Datenwert für die thermische Behaglichkeit (TS) Ermitteln (E30) der Notwendigkeit, den thermischen Zustand des Insassen zu regulieren,
**dadurch gekennzeichnet, dass**, wenn eine Regulierung des thermischen Zustands des Insassen erforderlich ist, das Wärmeverwaltungssystem ferner die folgenden Schritte umfasst:
- Bestimmen (E40) mindestens eines ersten Teils und eines zweiten Teils des Körpers des Insassen, die verschieden sind, auf die einzuwirken ist, um den thermischen Zustand des Insassen zu regulieren,
- für jeden im Schritt (E40) bestimmten Teil des Körpers Ermitteln (E50) einer zugeordneten Ausrüstung (3, 5, 7, 9), die es ermöglicht, auf diesen Teil des Körpers einzuwirken,
- Steuern (E61, E62) von mindestens:
• einem ersten Aktor, der zur Regelung mindestens eines Parameters einer ersten zugeordneten Ausrüstung konfiguriert ist, die geeignet ist, auf den ersten Teil des Körpers des Insassen einzuwirken, und
• einem zweiten Aktor, der zur Regelung mindestens eines Parameters einer zweiten zugeordneten Ausrüstung konfiguriert ist, die geeignet ist, auf den zweiten Teil des Körpers des Insassen auf eine in Bezug auf die erste Ausrüstung differenzierte Art einzuwirken.

13. Wärmeverwaltungsverfahren nach dem vorhergehenden Anspruch, das ferner einen Schritt (E12) des Erfassens mindestens einer Zeitinformation (t) bezüglich des Nutzungsszenarios des Fahrzeugs umfasst und bei dem das Verfahren die mindestens eine Zeitinformation (t) zum Bestimmen (E40) der Teile des Körpers berücksichtigt, auf die einzuwirken ist, um den thermischen Zustand des Insassen zu regulieren.

14. Wärmeverwaltungsverfahren nach einem der Ansprüche 12 oder 13, bei dem Steuersignale (SC) zur Steuerung der Aktoren erzeugt werden und mindestens eine Leistungsinformation der zugeordneten Ausrüstung umfassen.

15. Wärmeverwaltungsverfahren nach einem der Ansprüche 12 bis 14, bei dem Steuersignale (SC) zur Steuerung der Aktoren erzeugt werden und mindestens einen vorgegebenen Zeitverzögerungsdatenwert wie etwa eine vorgegebene Dauer oder eine erreichte Bedingung thermischer Neutralität umfassen.

## Claims

1. Thermal management system (1) for a motor vehicle, said vehicle comprising at least two pieces of equipment (3, 5, 7, 9), said thermal management system (1) comprising:
- at least one sensor (13, 113) capable of measuring at least one quantity that can be used to determine at least one thermal comfort data item (TS) representative of the thermal state of at least one occupant of said vehicle,
- a predefined number of actuators (A101, A102, A103, A104), configured, respectively, for adjusting at least one parameter of an associated piece of equipment (3, 5, 7, 9) capable of regulating the thermal state of the occupant, and
- a control device (12) for controlling the actuators (A101, A102, A103, A104), capable of:
• determining at least one thermal comfort data item (TS) on the basis of the measurements of said at least one sensor (13, 113), and capable of
• using said at least one thermal comfort data item (TS) for determining whether thermal regulation is required and for controlling the actuators (A101, A102, A103, A104),
the control device (12) comprising at least one processing means (14) for performing the following operations on the basis of said at least one thermal comfort data item (TS) :
- identifying at least a first piece of equipment (3, 5, 7, 9) for acting on a first part of the occupant's body and a second piece of equipment (3, 5, 7, 9) for acting on a second part of the occupant's body if thermal regulation is required, and
- controlling at least a first actuator configured for adjusting at least one parameter of the first piece of equipment identified and a second actuator configured for adjusting at least one parameter of the second piece of equipment identified, so as to act on said parts of the occupant's body, **characterized in that** said at least one sensor (13, 113) comprises at least one thermal state sensor (13), such as an infrared sensor, capable of measuring at least one thermal quantity relating to the thermal state of at least one occupant of said vehicle.

2. Thermal management system (1) according to the preceding claim, wherein the first part of the occupant's body and the second part of the occupant's body are different, the thermal management system being capable of acting in a differentiated way on the different parts of the occupant's body.

3. Thermal management system (1) according to Claim 1 or 2, comprising a means of acquiring at least one temporal information item (t) of a usage scenario of said vehicle, said at least one temporal information item (t) being usable for the identification of said pieces of equipment to be controlled for local regulation of the thermal state of the occupant on the parts of their body.

4. Thermal management system (1) according to one of the preceding claims, wherein said at least one sensor (13, 113) comprises a predetermined number of sensors of the thermal environment in the passenger compartment (113) of said vehicle.

5. Thermal management system (1) according to any one of the preceding claims, wherein the control device (12) comprises at least one processing means for determining said at least one thermal comfort data item (TS) using an algorithm that operates on the basis of a chosen comfort model comprising at least one thermo-physiological model based on the thermal sensations of a panel representative of the population whose body temperature has been measured in different conditions.

6. Thermal management system (1) according to any one of the preceding claims, wherein the first and second pieces of equipment allow heat exchanges of different kinds, for example by convection, by radiation, or by conduction.

7. Thermal management system (1) according to any one of the preceding claims, wherein at least one actuator (A104) is configured for adjusting at least one aerothermal parameter of a piece of equipment (9) of a heating, ventilation and/or air-conditioning installation of said vehicle, such as the temperature, the flow rate, and the distribution of an air flow directed to the passenger compartment.

8. Thermal management system (1) according to any one of the preceding claims, wherein at least one actuator (A101, A102) is configured for adjusting at least one thermal parameter of a piece of equipment (3, 5) provided in the passenger compartment of said vehicle, such as a glazing unit, the steering wheel or a seat, so as to adjust the thermal state of the occupant at a given part of the body.

9. Thermal management system (1) according to any one of the preceding claims, wherein one of the different parts of the occupant's body is at least one area of the face, the nape of the neck, at least one shoulder, the chest, the back, at least one hand, at least one arm, at least one leg, at least one foot and/or one ankle.

10. Thermal management system (1) according to any one of the preceding claims, comprising at least one identification means capable of locating at least one part of the occupant's body in space, using the measurements made by said at least one sensor (13).

11. Thermal management system (1) according to the preceding claim, wherein:
- said at least one sensor (13) is capable of capturing at least one image or sequence of images, and wherein
- the identification means comprises at least one image processing means for locating at least one part of the occupant's body on the basis of the image capture(s) and for determining the position of the occupant.

12. Thermal management method implemented by a thermal management system (1) for a motor vehicle according to any one of the preceding claims, the thermal management method comprising the following steps:
- acquiring a measurement or measurements (E10, E11) of at least one quantity that can be used to determine at least one thermal comfort data item (TS) representative of the thermal state of at least one occupant of said vehicle, step (E10) being a step of acquiring a measurement or measurements of one or more thermal quantities relating to said at least one occupant, step (E10) being performed by said thermal state sensor (13) of the thermal management system (1),
- determining (E20) at least one thermal comfort data item (TS) on the basis of said at least one measured quantity,
- on the basis of said at least one determined thermal comfort data item (TS), identifying (E30) the need to regulate the thermal state of the occupant, **characterized in that**, if regulation of the thermal state of the occupant is required, said thermal management method further comprises the following steps:
- determining (E40) at least a first part and a second part of the occupant's body, which are different from one another, on which to act in order to regulate the thermal state of the occupant,
- for each part of the body determined in step (E40), identifying (E50) an associated piece of equipment (3, 5, 7, 9) for acting on this part of the body,
- controlling (E61, E62) at least:
• a first actuator configured for adjusting at least one parameter of a first associated piece of equipment capable of acting on the first part of the occupant's body, and
• a second actuator configured for adjusting at least one parameter of a second associated piece of equipment capable of acting on the second part of the occupant's body in a differentiated way relative to the first piece of equipment.

13. Thermal management method according to the preceding claim, further comprising a step (E12) of acquiring at least one temporal information item (t) concerning the usage scenario of said vehicle, and wherein the thermal management method takes said at least one temporal information item (t) into account for the determination (E40) of the parts of the body on which to act in order to regulate the thermal state of the occupant.

14. Thermal management method according to either of Claims 12 and 13, wherein control signals (SC) are generated for controlling said actuators and comprise at least one information item concerning the power of the associated piece of equipment.

15. Thermal management method according to any one of Claims 12 to 14, wherein control signals (SC) are generated for controlling said actuators and comprise at least one predefined timing data item, such as a predefined period or the reaching of a condition of thermal neutrality.
